**Europäisches Patentamt**

**(19) European Patent Office**

**Office européen des brevets**

(11) Publication number : **0 430 171 B1**

(12) **EUROPEAN PATENT SPECIFICATION**

(45) Date of publication of patent specification :
06.10.93 Bulletin 93/40

(51) Int. Cl.⁵ : **C09K 5/04**

(21) Application number : **90122654.8**

(22) Date of filing : **27.11.90**

(54) **Working fluid.**

(30) Priority : **30.11.89 JP 311166/89**
**30.11.89 JP 311168/89**

(43) Date of publication of application :
**05.06.91 Bulletin 91/23**

(45) Publication of the grant of the patent :
**06.10.93 Bulletin 93/40**

(84) Designated Contracting States :
**DE FR GB**

(56) References cited :
**EP-A- 0 299 614**
**EP-A- 3 173 872**
**DD-A- 271 121**
**US-A- 3 444 085**

(73) Proprietor : **MATSUSHITA ELECTRIC**
**INDUSTRIAL CO., LTD.**
**1006, Oaza Kadoma**
**Kadoma-shi, Osaka-fu, 571 (JP)**

(72) Inventor : **Yoshida, Yuji**
**1-5-18, Minami-machi**
**Itami-shi, Hyogo-ken (JP)**
Inventor : **Arita, Koji**
**2-1-6, Awaji, Higashiyodogawa-ku**
**Osaka-shi, Osaka-fu (JP)**
Inventor : **Funakura, Masami**
**1-5-1, Shodaiminami-machi**
**Hirakata-shi, Osaka-fu (JP)**

(74) Representative : **Eisenführ, Speiser & Partner**
**Martinistrasse 24**
**D-28195 Bremen (DE)**

EP 0 430 171 B1

## Description

The present invention relates to a working fluid which comprises plural halogenated hydrocarbons and is used in air conditioners and heat pumps and the like.

Description of the Related Art

Hitherto, as working fluids in air conditioners, heat pumps and the like, are used halogenated hydrocarbons derived from methane or ethane, which are also called as fluorinated halocarbons. They work at such utilization temperature that a condensation temperature and/or an evaporation temperature are from about 0 (zero) to about 50°C. Among them, chlorodifluoromethane ($CHClF_2$, R22) with a boiling point of -40.8°C is widely used as a working fluid in an air conditioner for a building and a large size refrigeration system.

Recently, depletion of the ozone layer in the stratosphere with the fluorinated halocarbon is seriously discussed as one of global environmental problems, and amounts to be used and produced of some fully halogenated chlorofluorocarbons (CFCs) which have high ozone depletion potential are limited by the Montreal Protocol. In future, their use and production will be banned.

R22 has an ozone depletion potential (hereinafter referred to as "ODP") of 0.05 when ODP of trichlorofluoromethane ($CCl_3F$, R11) is defined to be 1 (one). Though R22 is not a CFC, its production and use are expected to increase and it is expected that R22 will have significant influences on the human living in future, since the air conditioners and the heat pumps are and will be widely used. Therefore, it is highly desired to quickly develop a working fluid which has a small ODP and can be used as a substitute for R22.

## SUMMARY OF THE INVENTION

An object of the present invention is to provide a working fluid which has less influence on the ozone layer in the stratosphere and can be used as a substitute for R22.

According to the present invention, there is provided a working fluid comprising difluoroethane ($C_2H_4F_2$), and at least two fluorinated hydrocarbon having a boiling point of not higher than -40°C under atmospheric pressure selected from the group consisting of methane derivatives and ethane derivatives which consist of one or two carbon atoms, hydrogen atoms and fluorine atoms (hereinafter referred to as "fluorinated methane or ethane derivative").

## BRIEF DESCRIPTION OF THE DRAWINGS

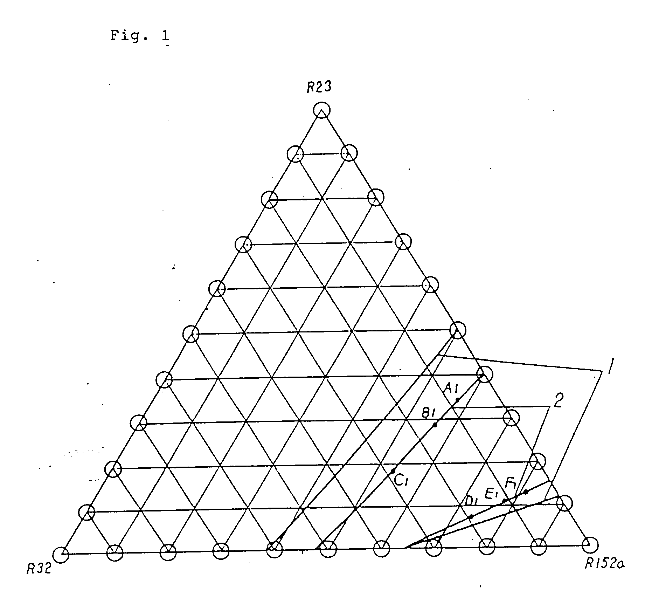

Figs. 1 to 6 are ternary composition diagrams of the working fluids in Examples 1 to 6, respectively.

## DETAILED DESCRIPTION OF THE INVENTION

Among the components of the working fluid of the present invention, difluoroethane has substantially no ozone depletion potential, namely its ODP is substantially zero and it contains no chlorine atom in its molecular structure.

Since the fluorinated methane or ethane derivatives have no chlorine atom in molecular structures, they have substantially no ozone depletion potential.

Among the fluorinated methane or ethane derivatives, trifluoromethane ($CHF_3$, ODP = 0), difluoromethane ($CH_2F_2$, ODP = 0), pentafluoroethane ($C_2HF_5$, ODP = 0) and trifluoroethane ($C_2H_3F_3$, ODP = 0) are preferred.

The working fluid of the present invention has much smaller influences on the ozone layer in the stratosphere than R22, since it comprises difluoroethane which has substantially no ozone depletion potential (ODP = 0) and the fluorinated methane or ethane derivatives having the boiling point not higher than -40°C which contain no chlorine atom in the molecular structure and have substantially no ozone depletion potential.

In a specific composition range, the working fluid of the present invention has substantially the same vapor pressure as R22 in a temperature range between about 0°C to about 50°C, and is suitable as a working fluid which can be used in presently used apparatuses as a substitute for R22.

The working fluid of the present invention is expected to have very small ODP, namely substantially 0 (zero).

In addition, since the working fluid of the present invention is a non-azeotropic mixture and has a temperature gradient in the condensing and evaporating processes, a higher coefficient of performance (COP) than R22 is expected when Lorenz cycle in which a temperature difference from a heat source is decreased is assembled.

The fluorinated halocarbons having the ozone depletion potential tend to have large global warming potential (hereinafter referred to as "GWP") when their ODP is large. Since the working fluid of the present invention comprises the above three essential components, its GWP may be substantially the same as or smaller than that of R22. Therefore, the working fluid of the present invention may have smaller influence on the global warming.

## PREFERRED EMBODIMENTS OF THE INVENTION

The present invention will be illustrated by following Examples.

### Example 1

Fig. 1 shows a ternary composition diagram indicating equilibrium states of a mixture consisting of trifluoromethane (R23), difluoromethane (R32) and 1,1-difluoroethane (R152a) at specific temperatures under specific pressure in a triangular coordinate.

In the triangular coordinate, in the counterclockwise direction from the top vertex, single compounds are assigned on the vertexes from a compound having the lowest boiling point to one having the highest boiling point. A composition (weight ratio) of the three compounds at one point on the triangular coordinate is expressed by a ratio of distances between said point and the opposite sides. The distance between said point and the opposite side corresponds to a proportion of the compound which is assigned to the vertex which faces said side.

In Fig. 1, the lines 1 are phase equilibrium lines of the mixture at 0°C under pressure of 4.044 kg/cm$^2$G. These temperature and pressure correspond to a saturated state of R22. The upper one of the phase equilibrium lines 1 (corresponding to R22 at 0°C) is a saturated vapor line, and the lower one is a saturated liquid line. In the area between these two lines, the mixture is in the phase equilibrium state. The lines 2 are phase equilibrium lines of the mixture at 50°C under pressure of 18.782 kg/cm$^2$G. These temperature and pressure correspond to a saturated state of R22.

If R23 alone is used, it exceeds the critical temperature at 50°C. However, the mixture has the saturated state so that it can be used in the air conditioner or heat pump which has the utilization temperature range between about 0°C and about 50°C.

As understood from Fig. 1, the mixture comprising about 0 to about 50 % by weight (for example, about 1 to about 50 % by weight) of R23, about 0 to about 60 % by weight (for example, about 1 to about 60 % by weight) of R32 and about 40 to about 90 % by weight of R152a is preferred, since it has substantially the same vapor pressure as R22 in the utilization temperature range between about 0°C and about 50°C. Further, the mixture comprising about 0 to about 40 % by weight (for example, about 1 to about 40 % by weight) of R23, about 0 to about 50 % by weight (for example, about 1 to about 50 % by weight) of R32 and about 50 to about 85 % by weight of R152a is more preferred, since it has substantially the same vapor pressure as R22 at all the utilizing temperatures between 0°C and 50°C.

The compositions of the working fluids at the points Al to F1 in Fig. 1 are shown in Table 1.

### Table 1

| Point | Al | Bl | Cl | Dl | El | Fl |
|---|---|---|---|---|---|---|
| R23 (wt. %) | 33.7 | 28.3 | 18.8 | 7.1 | 10.9 | 13.0 |
| R32 (wt. %) | 8.7 | 15.6 | 27.8 | 19.5 | 11.1 | 6.2 |
| R152a (wt. %) | 57.6 | 56.1 | 53.4 | 73.4 | 78.0 | 80.8 |

The points Al, Bl and Cl are on the saturated vapor line of the phase equilibrium lines 2 (corresponding to R22 at 50°C), and the points Dl, El and Fl are on the saturated liquid line of the phase equilibrium lines 2. Further, all of them are in the area between the saturated vapor line and the saturated liquid line of the phase equilibrium lines 1 (corresponding to R22 at 0°C). Therefore, the mixture is in the phase equilibrium state at 0°C under pressure of 4.044 kg/cm$^2$G which correspond to the saturated state of R22.

Then, the working fluid having the composition in Table 1 is in the saturated state or the phase equilibrium state under the saturated vapor pressure condition of R22 at 0°C and 50°C, so that, in the utilization temperature range between about 0°C and about 50°C, the working fluid has substantially the same condensation and evaporation temperatures as R22 when operated under the saturated vapor pressure of R22 at said temperatures.

In the above, the mixtures having the compositions on the phase equilibrium lines 2 (corresponding to R22 at 50°C) have been explained. In addition, when working fluids having compositions in the area inside the points Al to Fl, namely those having compositions which realize the phase equilibrium states at 0°C under pressure of 4.044 kg/cm$^2$G and at 50°C under pressure of 18.782 kg/cm$^2$G both corresponding to the saturated state of R22 are operated in the similar way to the above, condensation and evaporation temperatures which are substantially the same as those of R22 can be achieved in the utilization temperature range between about 0°C and about 50°C.

Accordingly, from Fig. 1, the mixture comprising about 0 to about 50 % by weight (for example, about 1 to about 50 % by weight) of trifluoromethane, about 0 to about 60 % by weight (for example, about 1 to about 60 % by weight) of difluoromethane and about 40 to about 90 % by weight of difluoroethane is preferred, since it has substantially the same vapor pressure as R22 in the utilization temperature range between about 0°C and about 50°C. Further, the mixture comprising about 0 to about 40 % by weight (for example, about 1 to about 40 % by weight) of trifluoromethane, about 0 to about 50 % by weight (for example, about 1 to about 50 % by weight) of difluoromethane and about 50 to about 85 % by weight of difluoroethane is more preferred, since it has substantially the same vapor pressure as R22 at all the utilizing temperatures between 0°C and 50°C.

Since the working fluids in Example 1 are expected to have the ODP of 0 (zero), they are very promising as substitute working fluids for R22.

Example 2

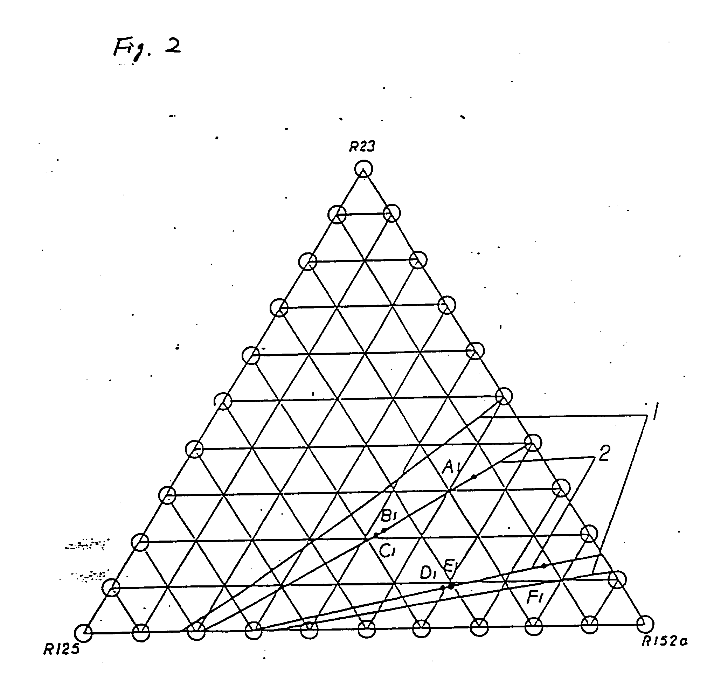

Fig. 2 shows a ternary composition diagram indicating equilibrium states of a mixture consisting of R23, pentafluoroethane (R125) and R152a at specific temperatures under specific pressure in a triangular coordinate.

The compositions of the working fluids at the points A1 to F1 in Fig. 2 are shown in Table 2.

Table 2

| Point | A1 | B1 | C1 | D1 | E1 | F1 |
|---|---|---|---|---|---|---|
| R23 (wt. %) | 33.2 | 21.7 | 21.1 | 8.9 | 9.1 | 13.3 |
| R125 (wt. %) | 13.8 | 35.9 | 37.0 | 31.3 | 30.4 | 11.4 |
| R152a (wt. %) | 53.0 | 42.4 | 41.9 | 59.8 | 60.5 | 75.3 |

In this case, the mixture comprising about 0 to about 50 % by weight (for example, about 1 to about 50 % by weight) of trifluoromethane, about 0 to about 85 % by weight (for example, about 1 to about 85 % by weight) of pentafluoroethane and about 15 to about 90 % by weight of difluoroethane is preferred, and further, the mixture comprising about 0 to about 40 % by weight (for example, about 1 to about 40 % by weight) of trifluoromethane, about 0 to about 80 % by weight (for example, about 1 to about 80 % by weight) of pentafluoroethane and about 20 to about 85 % by weight of difluoroethane is more preferred.

Since the working fluids in Example 2 are expected to have the ODP of 0 (zero), they are very promising as substitute working fluids for R22.

Example 3

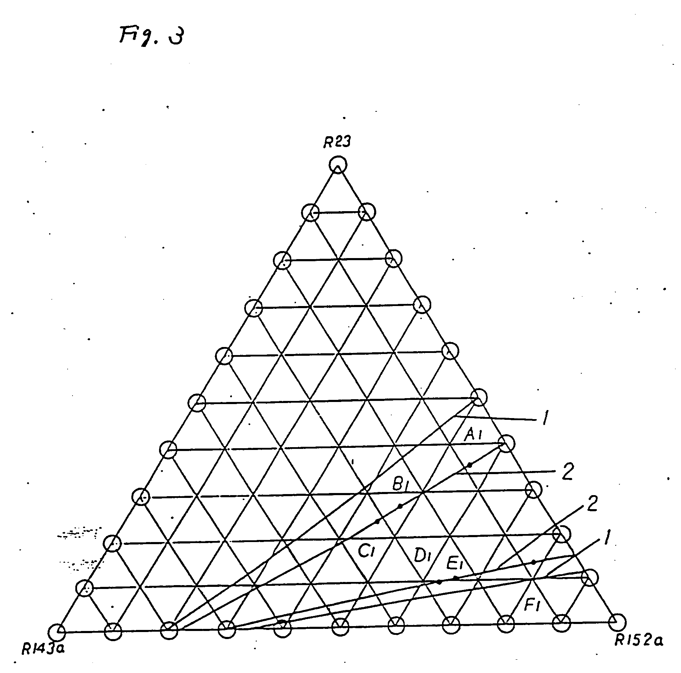

Fig. 3 shows a ternary composition diagram indicating equilibrium states of a mixture consisting of R23, 1,1,1-trifluoroethane (R143a) and R152a at specific temperatures under specific pressure in a triangular coordinate.

The compositions of the working fluids at the points Al to Fl in Fig. 3 are shown in Table 3.

EP 0 430 171 B1

Table 3

| Point | A1 | B1 | C1 | D1 | E1 | F1 |
|---|---|---|---|---|---|---|
| R23 (wt. %) | 35.5 | 26.3 | 24.1 | 9.9 | 10.8 | 14.1 |
| R143a (wt. %) | 9.1 | 26.5 | 30.7 | 26.9 | 23.1 | 7.9 |
| R152a (wt. %) | 55.4 | 47.2 | 45.2 | 63.2 | 66.1 | 78.0 |

In this case, the mixture comprising about 0 to about 50 % by weight (for example, about 1 to about 50 % by weight) of trifluoromethane, about 0 to about 80 % by weight (for example, about 1 to about 80 % by weight) of trifluoroethane and about 20 to about 90 % by weight of difluoroethane is preferred, and further, the mixture comprising about 0 to about 40 % by weight (for example, about 1 to about 40 % by weight) of trifluoromethane, about 0 to about 80 % by weight (for example, about 1 to about 80 % by weight) of trifluoroethane and about 20 to about 85 % by weight of difluoroethane is more preferred.

Since the working fluids in Example 3 are expected to have the ODP of 0 (zero), they are very promising as substitute working fluids for R22.

Example 4

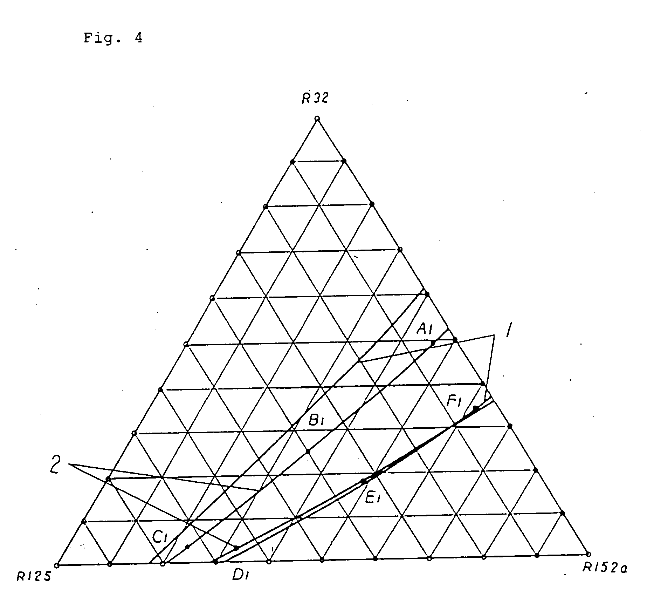

Fig. 4 shows a ternary composition diagram indicating equilibrium states of a mixture consisting of R32, R125 and R152a at specific temperatures under specific pressure in a triangular coordinate.

In Fig. 4, the lines 1 are phase equilibrium lines of the mixture at 0°C under pressure of 4.044 kg/cm²G. These temperature and pressure correspond to a saturated state of R22. The upper one of the phase equilibrium lines 1 (corresponding to R22 at 0°C) is a saturated vapor line, and the lower one is a saturated liquid line. In the area between these two lines, the mixture is in the phase equilibrium state. The lines 2 are phase equilibrium lines of the mixture at 50°C under pressure of 18.782 kg/cm²G. These temperature and pressure correspond to a saturated state of R22.

As understood from Fig. 4, the mixture comprising about 0 to about 60 % by weight (for example, about 1 to about 60 % by weight) of R32, about 0 to about 85 % by weight (for example, about 1 to about 85 % by weight) of R125 and about 15 to about 65 % by weight of R152a is preferred, since it has substantially the same vapor pressure as R22 in the utilization temperature range between about 0°C and about 50°C. Further, the mixture comprising about 0 to about 50 % by weight (for example, about 1 to about 50 % by weight) of R32, about 0 to about 80 % by weight (for example, about 1 to about 80 % by weight) of R125 and about 20 to about 65 % by weight of R152a is more preferred, since it has substantially the same vapor pressure as R22 at all the utilizing temperatures between 0°C and 50°C.

The compositions of the working fluids at the points Al to Fl in Fig. 4 are shown in Table 4.

Table 4

| Point | A1 | B1 | C1 | D1 | E1 | F1 |
|---|---|---|---|---|---|---|
| R32 (wt. %) | 49.3 | 25.1 | 3.6 | 2.7 | 18.3 | 33.7 |
| R125 (wt. %) | 4.0 | 39.9 | 73.5 | 65.0 | 32.8 | 4.4 |
| R152a (wt. %) | 46.7 | 35.0 | 22.9 | 32.3 | 48.9 | 61.9 |

The points Al, Bl and Cl are on the saturated vapor line of the phase equilibrium lines 2 (corresponding to R22 at 50°C), and the points D1 and E1 are on the saturated liquid line of the phase equilibrium lines 2. Further, all of them are in the area between the saturated vapor line and the saturated liquid line of the phase equilibrium

5

lines 1 (corresponding to R22 at 0°C). Therefore, the mixtures on these points are in the phase equilibrium state at 0°C under pressure of 4.044 kg/cm²G which correspond to the saturated state of R22.

In addition, the point FI is on the saturated liquid line of the phase equilibrium lines 1 (corresponding to R22 at 0°C) and in the range between the saturated vapor line and the saturated liquid line of the phase equilibrium lines 2 (corresponding to R22 at 50°C). Therefore, the mixture is in the phase equilibrium state at 50°C under pressure of 18.782 kg/cm²G which correspond to the saturated state of R22.

Then, the working fluid having the composition in Table 4 is in the saturated state or the phase equilibrium state under the saturated vapor pressure condition of R22 at 0°C and 50°C, so that, in the utilization temperature range between about 0°C and about 50°C, the working fluid has substantially the same condensation and evaporation temperatures as R22 when operated under the saturated vapor pressure of R22 at said temperatures.

In the above, the mixtures having the compositions on the phase equilibrium lines 1 or 2 (corresponding to R22 at 0°C or 50°C, respectively) have been explained. In addition, when working fluids having compositions in the area inside the points AI to FI, namely those having compositions which realize-the phase equilibrium states at 0°C under pressure of 4.044 kg/cm²G and at 50°C under pressure of 18.782 kg/cm²G both corresponding to the saturated state of R22 are operated in the similar way to the above, condensation and evaporation temperatures which are substantially the same as those of R22 can be achieved in the utilization temperature range between about 0°C and about 50°C.

Accordingly, from Fig. 4, the mixture comprising about 0 to about 60 % by weight (for example, about 1 to about 60 % by weight) of difluoromethane, about 0 to about 85 % by weight (for example, about 1 to about 85 % by weight) of pentafluoroethane and about 15 to about 65 % by weight of difluoroethane is preferred, since it has substantially the same vapor pressure as R22 in the utilization temperature range between about 0°C and about 50°C. Further, the mixture comprising about 0 to about 50 % by weight (for example, about 1 to about 50 % by weight) of difluoromethane, about 0 to about 80 % by weight (for example, about 1 to about 80 % by weight) of pentafluoroethane and about 20 to about 65 % by weight of difluoroethane is more preferred, since it has substantially the same vapor pressure as R22 at all the utilizing temperatures between 0°C and 50°C.

Since the working fluids in Example 4 are expected to have the ODP of 0 (zero), they are very promising as substitute working fluids for R22.

### Example 5

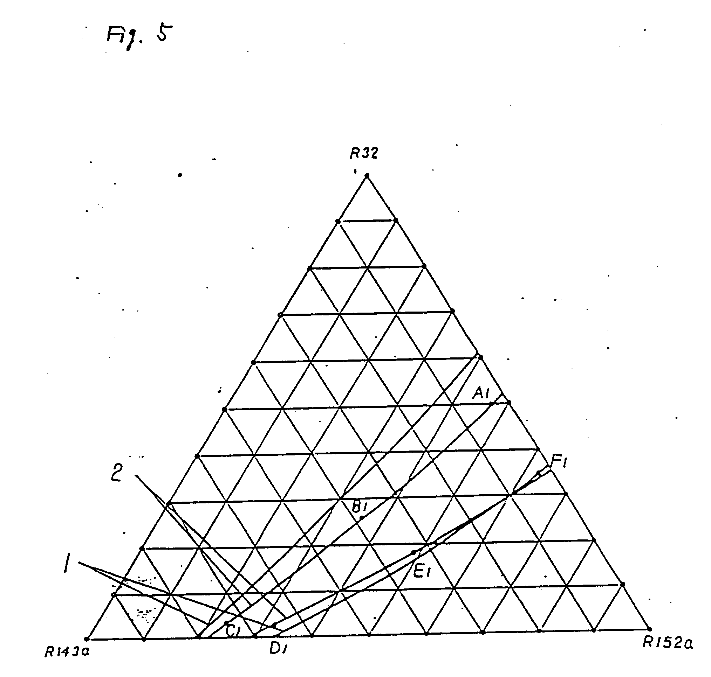

Fig. 5 shows a ternary composition diagram indicating equilibrium states of a mixture consisting of R32, R143a and R152a at specific temperatures under specific pressure in a triangular coordinate.

The compositions of the working fluids at the points AI to FI in Fig. 5 are shown in Table 5.

### Table 5

| Point | AI | BI | CI | DI | EI | FI |
|---|---|---|---|---|---|---|
| R32 (wt. %) | 49.9 | 25.8 | 3.1 | 2.3 | 18.4 | 34.2 |
| R143a (wt. %) | 3.1 | 38.2 | 73.5 | 66.0 | 32.6 | 3.5 |
| R152a (wt. %) | 47.0 | 36.0 | 23.4 | 31.7 | 49.0 | 62.3 |

In this case, the mixture comprising about 0 to about 60 % by weight (for example, about 1 to about 60 % by weight) of difluoromethane, about 0 to about 80 % by weight (for example, about 1 to about 80 % by weight) of trifluoroethane and about 20 to about 65 % by weight of difluoroethane is preferred, and further, the mixture comprising about 0 to about 50 % by weight (for example, about 1 to about 50 % by weight) of difluoromethane, about 0 to about 80 % by weight (for example, about 1 to about 80 % by weight) of trifluoroethane and about 20 to about 65 % by weight of difluoroethane is more preferred.

Since the working fluids in Example 5 are expected to have the ODP of 0 (zero), they are very promising as substitute working fluids for R22.

Example 6

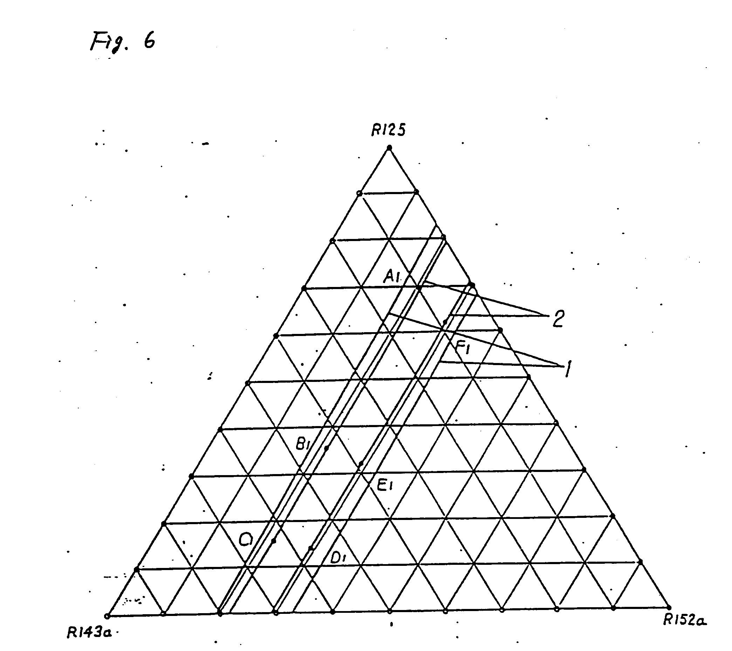

Fig. 6 shows a ternary composition diagram indicating equilibrium states of a mixture consisting of R125, R143a and R152a at specific temperatures under specific pressure in a triangular coordinate.

The compositions of the working fluids at the points Al to Fl in Fig. 6 are shown in Table 6.

Table 6

| Point | Al | Bl | Cl | Dl | El | Fl |
|---|---|---|---|---|---|---|
| R125 (wt. %) | 69.6 | 36.1 | 17.0 | 14.8 | 31.6 | 62.0 |
| R143a (wt. %) | 9.6 | 42.8 | 61.7 | 56.3 | 39.4 | 8.9 |
| R152a (wt. %) | 20.8 | 21.1 | 21.3 | 28.9 | 29.0 | 29.1 |

In this case, the mixture comprising about 0 to about 85 % by weight (for example, about 1 to about 85 % by weight) of pentafluoroethane, about 0 to about 80 % by weight (for example, about 1 to about 80 % by weight) of trifluoroethane and about 15 to about 35 % by weight of difluoroethane is preferred, and further, the mixture comprising about 0 to about 80 % by weight (for example, about 1 to about 80 % by weight) of pentafluoroethane, about 0 to about 80 % by weight (for example, about 1 to about 80 % by weight) of trifluoroethane and about 20 to about 30 % by weight of difluoroethane is more preferred.

Since the working fluids in Example 6 are expected to have the ODP of 0 (zero), they are very promising as substitute working fluids for R22.

From the results of above Examples, the working fluid of the present invention preferably comprises 15 to 90 % by weight of difluoroethane and at least two fluorinated methane or ethane derivative selected from the group consisting of not more than 50 % by weight of trifluoromethane, not more than 60 % by weight of difluoromethane, not more than 85 % by weight of pentafluoroethane and not more than 80 % by weight of trifluoroethane. More preferably, the working fluid of the present invention comprises 20 to 85 % by weight of difluoroethane and at least two fluorinated methane or ethane derivative selected from the group consisting of not more than 40 % by weight of trifluoromethane, not more than 50 % by weight of difluoromethane, not more than 80 % by weight of pentafluoroethane and not more than 80 % by weight of trifluoroethane.

In the above Examples, the mixtures contain three fluorinated halocarbons, although it is possible to mix four or more fluorinated halocarbons including structural isomers. In such case, preferably, the mixture comprises difluoroethane as the first component and, as the second and third components two fluorinated halocarbons selected from the group consisting of trifluoromethane, difluoromethane, pentafluoroethane and trifluoroethane.

**Claims**

1. A working fluid comprising 15 to 90% by weight of difluoroethane and at least two fluorinated hydrocarbon having a boiling point of not higher than -40°C under atmospheric pressure selected from the group consisting of methane derivatives and ethane derivatives which consist of one or two carbon atoms, hydrogen atoms and fluorine atoms.

2. The working fluid as claimed in claim 1, wherein said at least two fluorinated hydrocarbons are selected from the group consisting of trifluoromethane, difluoromethane, pentafluoroethane and trifluoroethane.

3. The working fluid as claimed in claim 1, which comprises 15 to 90 % by weight of difluoroethane and at least two fluorinated hydrocarbons selected from the group consisting of not more than 50 % by weight of trifluoromethane, not more than 60 % by weight of difluoromethane, not more than 85 % by weight of pentafluoroethane and not more than 80 % by weight of trifluoroethane.

4. The working fluid as claimed in claim 1, which comprises 20 to 85 % by weight of difluoroethane and at least two fluorinated hydrocarbons selected from the group consisting of not more than 40 % by weight

7

of trifluoromethane, not more than 50 % by weight of difluoromethane, not more than 80 % by weight of pentafluoroethane and not more than 80 % by weight of trifluoroethane.

5. The working fluid as claimed in claim 1, which comprises 40 to 90 % by weight of difluoroethane, not more than 50 % by weight of trifluoromethane and not more than 60 % by weight of difluoromethane.

6. The working fluid as claimed in claim 5, which comprises 50 to 85 % by weight of difluoroethane, not more than 40 % by weight of trifluoromethane and not more than 50 % by weight of difluoromethane.

7. The working fluid as claimed in claim 1, which comprises 15 to 90 % by weight of difluoroethane, not more than 50 % by weight of trifluoromethane and not more than 85 % by weight of pentafluoroethane.

8. The working fluid as claimed in claim 7, which comprises 20 to 85 % by weight of difluoroethane, not more than 40 % by weight of trifluoromethane and not more than 80 % by weight of pentafluoroethane.

9. The working fluid as claimed in claim 1, which comprises 20 to 90 % by weight of difluoroethane, not more than 50 % by weight of trifluoromethane and not more than 80 % by weight of trifluoroethane.

10. The working fluid as claimed in claim 9, which comprises 20 to 85 % by weight of difluoroethane, not more than 40 % by weight of trifluoromethane and not more than 80 % by weight of trifluoroethane.

11. The working fluid as claimed in claim 1, which comprises 15 to 65 % by weight of difluoroethane, not more than 60 % by weight of difluoromethane and not more than 85 % by weight of pentafluoroethane.

12. The working fluid as claimed in claim 11, which comprises 20 to 65 % by weight of difluoroethane, not more than 50 % by weight of difluoromethane and not more than 80 % by weight of pentafluoroethane.

13. The working fluid as claimed in claim 1, which comprises 20 to 65 % by weight of difluoroethane, not more than 60 % by weight of difluoromethane and not more than 80 % by weight of trifluoroethane.

14. The working fluid as claimed in claim 13, which comprises 20 to 65 % by weight of difluoroethane, not more than 50 % by weight of difluoromethane and not more than 80 % by weight of trifluoroethane.

15. The working fluid as claimed in claim 1, which comprises 15 to 35 % by weight of difluoroethane, not more than 85 % by weight of pentafluoroethane and not more than 80% by weight of trifluoroethane.

16. The working fluid as claimed in claim 15, which comprises 20 to 30 % by weight of difluoroethane, not more than 80 % by weight of pentafluoroethane and not more than 80 % by weight of trifluoroethane.

## Patentansprüche

1. Arbeitsfluid, enthaltend 15 bis 90 Gew.-% Difluorethan und mindestens zwei fluorierte Kohlenwasserstoffe mit einem Siedepunkt nicht oberhalb von -40 °C bei Atmosphärendruck, ausgewählt aus der Gruppe bestehend aus Methanderivaten und Ethanderivaten, die aus einem oder zwei Kohlenstoffatomen, aus Wasserstoffatomen und aus Fluoratomen bestehen.

2. Arbeitsfluid nach Anspruch 1, wobei die mindestens zwei fluorierten Kohlenwasserstoffe ausgewählt sind aus der Gruppe bestehend aus Trifluormethan, Difluormethan, Pentafluorethan und Trifluorethan.

3. Arbeitsfluid nach Anspruch 1, enthaltend 15 bis 90 Gew.-% Difluorethan und mindestens zwei fluorierte Kohlenwasserstoffe, ausgewählt aus der Gruppe bestehend aus nicht mehr als 50 Gew.-% Trifluormethan, nicht mehr als 60 Gew.-% Difluormethan, nicht mehr als 85 Gew.-% Pentafluorethan und nicht mehr als 80 Gew.-% Trifluorethan.

4. Arbeitsfluid nach Anspruch 1, enthaltend 20 bis 85 Gew.-% Difluorethan und mindestens zwei fluorierte Kohlenwasserstoffe, ausgewählt aus der Gruppe bestehend aus nicht mehr als 40 Gew.-% Trifluormethan, nicht mehr als 50 Gew.-% Difluormethan, nicht mehr als 80 Gew.-% Pentafluorethan und nicht mehr als 80 Gew.-% Trifluorethan.

5. Arbeitsfluid nach Anspruch 1, enthaltend 40 bis 90 Gew.-% Difluorethan, nicht mehr als 50 Gew.-% Trifluormethan und nicht mehr als 60 Gew.-% Difluormethan.

6. Arbeitsfluid nach Anspruch 5, enthaltend 50 bis 85 Gew.-% Difluorethan, nicht mehr als 40 Gew.-% Trifluormethan und nicht mehr als 50 Gew.-% Difluormethan.

7. Arbeitsfluid nach Anspruch 1, enthaltend 15 bis 90 Gew.-% Difluorethan, nicht mehr als 50 Gew.-% Trifluormethan und nicht mehr als 85 Gew.-% Pentafluorethan.

8. Arbeitsfluid nach Anpruch 7, enthaltend 20 bis 85 Gew.-% Difluorethan, nicht mehr als 40 Gew.-% Trifluormethan und nicht mehr als 80 Gew.-% Pentafluorethan.

9. Arbeitsfluid nach Anspruch 1, enthaltend 20 bis 90 Gew.-% Difluorethan, nicht mehr als 50 Gew.-% Trifluormethan und nicht mehr als 80 Gew.-% Trifluorethan.

10. Arbeitsfluid nach Anspruch 9, enthaltend 20 bis 85 Gew.-% Difluormethan, nicht mehr als 40 Gew.-% Trifluormethan und nicht mehr als 80 Gew.-% Trifluorethan.

11. Arbeitsfluid nach Anspruch 1, enthaltend 15 bis 65 Gew.-% Difluorethan, nicht mehr als 60 Gew.-% Difluormethan und nicht mehr als 85 Gew.-% Pentafluorethan.

12. Arbeitsfluid nach Anspruch 11, enthaltend 20 bis 65 Gew.-% Difluorethan, nicht mehr als 50 Gew.-% Difluormethan und nicht mehr als 80 Gew.-% Pentafluorethan.

13. Arbeitsfluid nach Anspruch 1, enthaltend 20 bis 65 Gew.-% Difluorethan, nicht mehr als 60 Gew.-% Difluormethan und nicht mehr als 80 Gew.-% Trifluorethan.

14. Arbeitsfluid nach Anspruch 13, enthaltend 20 bis 65 Gew.-% Difluorethan, nicht mehr als 50 Gew.-% Difluormethan und nicht mehr als 80 Gew.-% Trifluorethan.

15. Arbeitsfluid nach Anspruch 1, enthaltend 15 bis 35 Gew.-% Difluorethan, nicht mehr als 85 Gew.-% Pentafluorethan und nicht mehr als 80 Gew.-% Trifluorethan.

16. Arbeitsfluid nach Anspruch 15, enthaltend 20 bis 30 Gew.-% Difluorethan, nicht mehr als 80 Gew.-% Pentafluorethan und nicht mehr als 80 Gew.-% Trifluorethan.

## Revendications

1. Fluide de travail comprenant 15 à 90 % en poids de difluoroéthane et au moins deux hydrocarbures fluorés ayant un point d'ébullition de pas plus de -40°C sous la pression atmosphérique choisis parmi les dérivés de méthane et les dérivés d'éthane qui consistent en un ou deux atomes de carbone, des atomes d'hydrogène et des atomes de fluor.

2. Fluide de travail selon la revendication 1, dans lequel lesdits au moins deux hydrocarbures fluorés sont choisis parmi le trifluorométhane, le difluorométhane, le pentafluoroéthane et le trifluoroéthane.

3. Fluide de travail selon la revendication 1, qui comprend 15 à 90 % en poids de difluoroéthane et au moins deux hydrocarbures fluorés choisis dans le groupe de pas plus de 50 % en poids de trifluoromethane, pas plus de 60 % en poids de difluorométhane, pas plus de 85 % en poids de pentafluoroéthane et pas plus de 80 % en poids de trifluoroéthane.

4. Fluide de travail selon la revendication 1, qui comprend 20 à 85 % en poids de difluoroéthane et au moins deux hydrocarbures fluorés choisis dans le groupe de pas plus de 40 % en poids de trifluorométhane, pas plus de 50 % en poids de difluorométhane, pas plus de 80 % en poids de pentafluoroéthane et pas plus de 80 % en poids de trifluoroéthane.

5. Fluide de travail selon la revendication 1, qui comprend 40 à 90 % en poids de difluoroéthane, pas plus de 50 % en poids de trifluorométhane et pas plus de 60 % en poids de difluorométhane.

6. Fluide selon la revendication 5, qui comprend 50 à 85 % en poids de difluoroéthane, pas plus de 40 % en poids de trifluoromethane et pas plus de 50 % en poids de difluorométhane.

7. Fluide de travail selon la revendication 1, qui comprend 15 à 90 % en poids de difluoroéthane, pas plus de 50 % en poids de trifluorométhane et pas plus de 85 % en poids de pentafluoroéthane.

8. Fluide de travail selon la revendication 7, qui comprend 20 à 85 % en poids de difluoroéthane, pas plus de 40 % en poids de trifluorométhane et pas plus de 80 % en poids de pentafluoroéthane.

9. Fluide de travail selon la revendication 1, qui comprend 20 à 90 % en poids de difluoroéthane, pas plus de 50 % en poids de trifluoromethane et pas plus de 80 % en poids de trifluoroéthane.

10. Fluide de travail selon la revendication 9, qui comprend 20 à 85 % en poids de difluoroéthane, pas plus de 40 % en poids de trifluorométhane et pas plus de 80 % en poids de trifluoroéthane.

11. Fluide de travail selon la revendication 1, qui comprend 15 à 65 % en poids de difluoroéthane, pas plus de 60 % en poids de difluorométhane et pas plus de 85 % en poids de pentafluoroéthane.

12. Fluide de travail selon la revendication 11, qui comprend 20 à 65 % en poids de difluoroéthane, pas plus de 50 % en poids difluorométhane et pas plus de 80 % en poids de pentafluoroéthane.

13. Fluide de travail selon la revendication 1, qui comprend 20 à 65 % en poids de difluoroéthane, pas plus de 60 % en poids de difluorométhane et pas plus de 80 % en poids de trifluoroéthane.

14. Fluide de travail selon la revendication 13, qui comprend 20 à 65 % en poids de difluoroéthane, pas plus de 50 % en poids de difluorométhane et pas plus de 80 % en poids de trifluoroéthane.

15. Fluide de travail selon la revendication 1, qui comprend 15 à 35 % en poids de difluoroéthane, pas plus de 85 % en poids de pentafluoroéthane et pas plus de 80 % en poids de trifluoroéthane.

16. Fluide de travail selon la revendication 15, qui comprend 20 à 30 % en poids de difluoroéthane, pas plus de 80 % en poids de pentafluoroéthane et pas plus de 80 % en poids de trifluoroéthane.

Fig. 1

Fig. 2

Fig. 3

Fig. 4

Fig. 5

Fig. 6